# EUROPÄISCHE PATENTSCHRIFT

(11) **EP 3 537 116 B1**
(45) Veröffentlichungstag und Bekanntmachung des Hinweises auf die Patenterteilung: **11.05.2022**
(21) Anmeldenummer: 19155724.8
(22) Anmeldetag: 06.02.2019
(51) Int. Cl.: G01G 19/02

(54) **VERFAHREN ZUM EINBAU EINES WEIGH-IN-MOTION SENSORS IN EINE FAHRBAHN**
METHOD FOR INSTALLING A WEIGH IN MOTION SENSOR IN A ROAD
PROCÉDÉ D'INSTALLATION D'UN CAPTEUR DE PESAGE EN MARCHE DANS UNE CHAUSSÉE

(30) Priorität: 05.03.2018 EP 18159879
(43) Veröffentlichungstag der Anmeldung: 11.09.2019
(73) Patentinhaber: Kistler Holding AG, 8408 Winterthur (CH)
(72) Erfinder: Simons, Gerd, 8006 Zürich (CH); Pfluger, Kim, 8404 Winterthur (CH)

(56) Entgegenhaltungen:
- EP-A1- 0 491 655
- EP-A1- 0 654 654
- EP-A1- 1 070 942
- CN-A- 104 374 459

## Beschreibung

### Technisches Gebiet

Die Anmeldung betrifft ein Verfahren zum Einbau eines Weigh-In-Motion Sensors in eine Fahrbahn nach dem Oberbegriff der unabhängigen Ansprüche.

### Stand der Technik

Ein WIM Sensor ist ein in eine Fahrbahn einbaubarer Kraftaufnehmer. Mit dem in die Fahrbahn eingebauten WIM Sensor lässt sich eine Gewichtskraft eines auf der Fahrbahn fahrenden Fahrzeuges erfassen. So erfasst ein WIM Sensor in der Ausführungsform eines piezoelektrischen Kraftaufnehmers die Gewichtskraft eines mit einer Geschwindigkeit von bis zu 250km/h über den WIM Sensor fahren Fahrzeuges mit einer Empfindlichkeit von einigen pC/N und einer Genauigkeit von einigen Prozent. Aus der erfassten Gewichtskraft lassen sich vielfältige Verkehrsinformationen wie Radlast, Achslast, Gesamtgewicht, Reifendruck des fahrenden Fahrzeuges bestimmen.

Die Schrift EP0491655A1 offenbart einen solchen WIM Sensor. Der WIM Sensor weist ein zylinderförmiges metallisches Hohlprofil von 20mm bis 30mm Durchmesser und bis zu mehreren Metern Länge auf. Im Hohlprofil sind mehrere scheibenförmige piezoelektrische Aufnehmerelemente angeordnet. Der WIM Sensor wird in eine 30mm bis 50mm tiefen Nut in einer Deckschicht der Fahrbahn gelegt und mit einer Ausgussmasse vergossen. Das Hohlprofil erfüllt zwei Funktionen, es schützt die piezoelektrischen Aufnehmerelemente vor schädlichen Umwelteinflüssen und es leitet eine Gewichtskraft auf die piezoelektrischen Aufnehmerelemente weiter. Für eine erfasste Gewichtskraft gibt ein piezoelektrisches Aufnahmeelement ein der Grösse der erfassten Gewichtskraft proportionales elektrisches Signal ab, welches an eine ausserhalb des Hohlprofils angeordnete Auswerteeinheit weitergeleitet und dort ausgewertet wird. WIM Sensor und Auswerteeinheit bilden ein System zum automatisierten Erfassen von Verkehrsinformationen.

Nun ist ein WIM Sensor ein langlebiges Investitionsgut, welches gerade bei hohen Verkehrsaufkommen auf der Fahrbahn eine längere Lebensdauer als die Deckschicht der Fahrbahn hat. Wenn aber die Deckschicht der Fahrbahn aufgrund von Verschleiss ersetzt werden muss, wird auch der darin liegende WIM Sensor beschädigt und muss ersetzt werden.

Auch kann der in der Deckschicht der Fahrbahn liegende WIM Sensor selber einem Verschleiss ausgesetzt sein, beispielsweise wenn die den WIM Sensor umgebende Ausgussmasse infolge von schädlichen Umwelteinflüssen lokal beschädigt und abgetragen worden ist, so dass der WIM Sensor einem direkten mechanischen Kontakt mit fahrenden Fahrzeuge ausgesetzt ist, was die Lebensdauer des WIM Sensors beeinträchtigt.

Schliesslich unterscheidet sich die mit Ausgussmasse vergossene Nut farblich von der Deckschicht der Fahrbahn. Diese optisch erkennbare Nut kann Fahrer von Fahrzeugen verunsichern und zu für die Verkehrssicherheit gefährlichen Ausweichmanövern führen. Zudem können Fahrer von Fahrzeugen, die wissen, dass hier ein WIM Sensor verbaut ist, ebenfalls für die Verkehrssicherheit gefährliche Ausweichmanöver ausführen, einzig um die Erfassung der Gewichtskraft ihres Fahrzeuges zu vermeiden, beispielsweise wenn mit der erfassten Gewichtskraft des Fahrzeuges eine Maut erhoben wird.

Eine erste Aufgabe der vorliegenden Erfindung ist es, ein Verfahren zum Einbau eines WIM Sensor in eine Fahrbahn aufzuzeigen, welcher in der Fahrbahn eingebaute WIM Sensor bei Ersatz der Deckschicht der Fahrbahn nicht beschädigt wird. Eine weitere Aufgabe der Erfindung besteht darin, ein Verfahren zum Einbau eines solchen WIM Sensors in eine Fahrbahn aufzuzeigen, welcher eingebaute WIM Sensor deutlich weniger Verschleiss ausgesetzt ist und wo der Einbauort für Fahrer von Fahrzeugen auf der Fahrbahn optisch nicht erkennbar ist.

### Darstellung der Erfindung

Zumindest eine dieser Aufgaben wird durch die Merkmale der unabhängigen Ansprüche gelöst.

Die Erfindung betrifft ein Verfahren zum Einbau eines Weigh-In-Motion (WIM) Sensors in eine Fahrbahn nach den unabhängigen Ansprüchen 1 und 2 und dessen Verwendung nach Anspruch 10.

Mit der Erfindung erfolgt eine Abkehr vom Einbau des WIM Sensors in der Deckschicht der Fahrbahn. Erfindungsgemäss wird der WIM Sensor in eine Nut eingebracht, welche bis zu einer direkt an die Deckschicht angrenzende Unterschicht reicht. Vorzugsweise wird die Nut so tief in der Unterschicht angelegt, dass der in die Nut eingebrachte WIM Sensor nicht über eine Unterschichtoberfläche der Unterschicht vorsteht.

Dies hat den ersten Vorteil, dass der in der Fahrbahn eingebaute WIM Sensor bei Ersatz der Deckschicht der Fahrbahn nicht beschädigt werden kann, da der WIM Sensor vollständig unterhalb der Deckschicht, nämlich in der Unterschicht eingebracht ist.

Dies hat den weiteren Vorteil, dass der eingebaute WIM Sensor von der vollständigen Deckschicht vor direktem mechanischen Kontakt mit fahrenden Fahrzeugen geschützt ist, welcher eingebaute WIM Sensor somit deutlich weniger Verschleiss ausgesetzt.

Alternativ wird die Nut in einer Fahrbahn ohne Deckschicht angelegt; die Nut wird so viel mit Ausgussmasse vergossen, dass die Ausgussmasse bündig mit einer Unterschichtoberfläche der Unterschicht ist; und nachdem die Nut mit Ausgussmasse vergossen worden ist, wird eine Deckschicht auf der Unterschicht aufgebracht.

Dies hat den zusätzlichen Vorteil, dass ein Einbauort für Fahrer von Fahrzeugen auf der Fahrbahn optisch nicht erkennbar ist.

Im Folgenden wird die Erfindung beispielhaft unter Beizug der Figuren näher erklärt. Es zeigen
- Fig. 1: einen schematischen Querschnitt durch einen Teil einer Ausführungsform eines WIM-Sensors;
- Fig. 2: einen Querschnitt durch einen Teil einer ersten Ausführungsform einer Fahrbahn mit Deckschicht und Unterschicht;
- Fig. 3: einen Querschnitt der Fahrbahn nach Fig. 2 mit einer in Deckschicht und Unterschicht eingebrachten Nut;
- Fig. 4: einen Querschnitt der Fahrbahn nach Fig. 3 mit einem in die Nut gehängten WIM-Sensor nach Fig. 1;
- Fig. 5: einen Querschnitt der Fahrbahn nach Fig. 4 mit dem in der Nut mit Ausgussmasse vergossenen WIM-Sensor nach Fig. 1;
- Fig. 6: einen Querschnitt der Fahrbahn nach Fig. 5 nach dem Abtragen der Deckschicht;
- Fig. 7: einen Querschnitt der Fahrbahn nach Fig. 6 nach dem Aufbringen einer neuen Deckschicht;
- Fig. 8: einen Querschnitt durch einen Teil einer zweiten Ausführungsform einer Fahrbahn ohne Deckschicht und Unterschicht;
- Fig. 9: einen Querschnitt der Fahrbahn nach Fig. 8 mit einer in der Unterschicht eingebrachten Nut;
- Fig. 10: einen Querschnitt der Fahrbahn nach Fig. 9 mit einem in die Nut gehängten WIM-Sensor nach Fig. 1;
- Fig. 11: einen Querschnitt der Fahrbahn nach Fig. 10 mit dem in der Nut mit Ausgussmasse vergossenen WIM-Sensor nach Fig. 1;
- Fig. 12: einen Querschnitt der Fahrbahn nach Fig. 11 nach dem Aufbringen einer Deckschicht;
- Fig. 13: einen Querschnitt der Fahrbahn nach Fig. 12 nach dem Abtragen vom Deckschicht; und
- Fig. 14: einen Querschnitt der Fahrbahn nach Fig. 13 nach dem Aufbringen einer neuen Deckschicht.

### Wege zur Ausführung der Erfindung

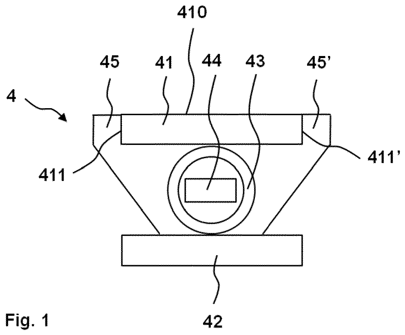

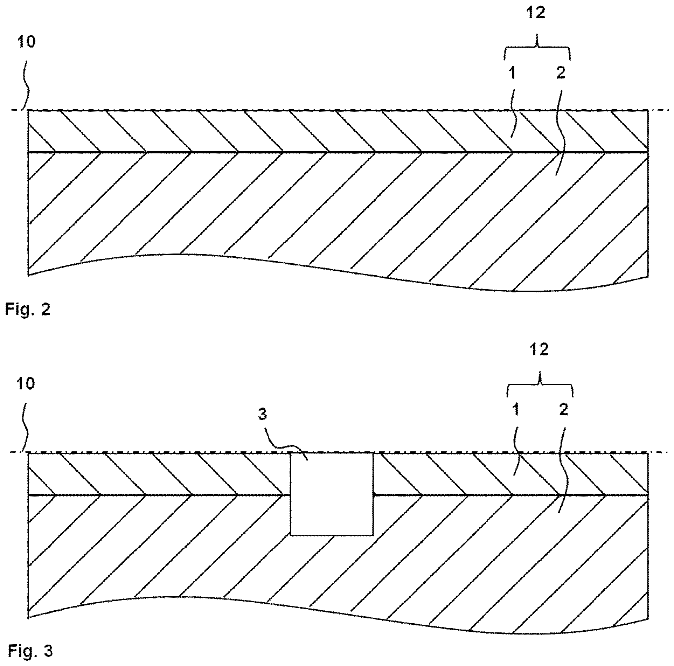

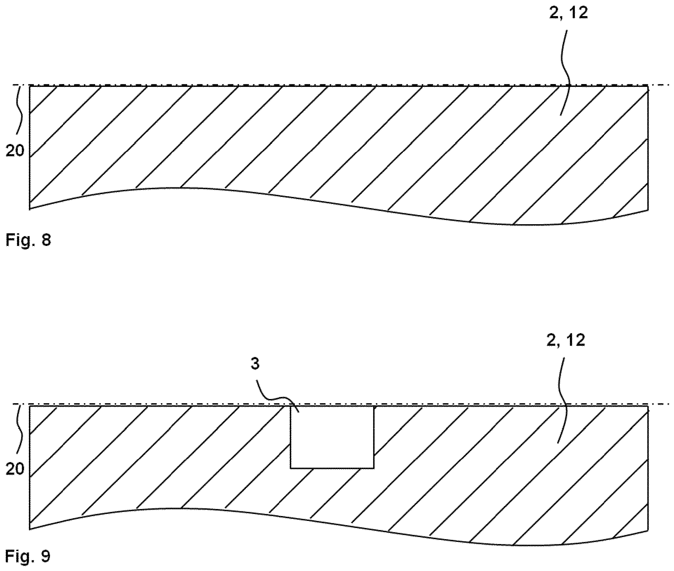

Fig. 1 zeigt eine Ausführungsform eines WIM-Sensors 4. Die Fig. 2 bis 7 zeigen eine erste Ausführungsform des erfindungsgemässen Verfahrens zum Einbau des WIM Sensors 4 in eine Fahrbahn 12, und die Fig. 8 bis 14 zeigen eine zweite Ausführungsform des erfindungsgemässen Verfahrens zum Einbau des WIM Sensors 4 in eine Fahrbahn 12.

Die Fahrbahn 12 weist eine Deckschicht 1, 1' und eine direkt an die Deckschicht 1, 1' angrenzende Unterschicht 2 auf. Auf der Fahrbahn 12 fahrende Fahrzeuge sind im direkten mechanischen Kontakt mit einer Deckschichtoberfläche 10 der Deckschicht 1, 1'. Die Fahrzeuge sind figürlich nicht dargestellt. Die Deckschicht 1, 1' liegt oberhalb der Unterschicht 2. Im Sinne der Erfindung beziehen sich Eigenschaftswörter der Deckschicht 1, 1' und der Unterschicht 2 wie "oberhalb" und "unterhalb" auf die figürliche Darstellung der Fahrbahn 12, wo die Deckschicht 1, 1' oberhalb der Unterschicht 2 gezeichnet ist.

Die Deckschicht 1, 1' ist somit dem direkten mechanischen Kontakt durch fahrende Fahrzeuge ausgesetzt. Die Deckschicht 1, 1' ist aber auch schädlichen Umwelteinflüssen wie Wasser, Schnee, Eis, Hitze, Kälte, Auftaumittel, usw. direkt ausgesetzt. Die Deckschicht 1, 1' besteht daher aus besonders verschleissfestem Material wie Gussasphalt, Asphaltbeton, usw. Die Deckschicht 1, 1' besteht aus sehr feinkörnigem Material. Die Deckschicht 1, 1' weist üblicherweise eine Dicke von 30 bis 40mm auf. Die Deckschicht 1, 1' ist einem Verschleiss ausgesetzt, im Rahmen von Deckenbauprogrammen wird sie je nach Verschleiss in zeitlichen Abständen von 5 bis 20 Jahren ersetzt. Aber bereits vor einem solchen Ersatz ist die Deckschicht 1, 1' in ihrer Dicke uneinheitlich und weist beispielsweise in Bereichen der Deckschichtoberfläche 10 wo viele Fahrzeuge fahren, Spurrillen auf.

Die Unterschicht 2 grenzt in einer Unterschichtoberfläche 20 direkt an die Deckschicht 1, 1'. Die Unterschicht 2 kann gebunden oder ungebunden sein. Eine gebundene Unterschicht 2 ist bodenverfestigt oder besteht aus körnigem Material wie Kies, Sand, Schotter, usw., welches mit Bindemittel wie Bitumen, Zement, usw. gemischt ist. Die gebundene Unterschicht 2 ist so dauerhaft tragfähig und frostbeständig. Die gebundene Unterschicht 2 wird auch Binderschicht genannt. Die ungebundene Unterschicht 2 besteht aus grobkörnigem Material wie Kies, Sand, Schotter, usw. Eine ungebundene Unterschicht 2 ist besonders wasserdurchlässig, um so in die Fahrbahn 12 eindringendes Wasser rasch abzuleiten. Eine unterste ungebundene Unterschicht 2 wird auch Frostschutzschicht genannt.

Eine Korngrösse der Materialien von Deckschicht 1, 1' und Unterschicht 2 ist oft normiert. So ist in der Schweiz die Korngrösse der Materialien von Deckschicht 1, 1' und Unterschicht 2 in einer Grundnorm SN-640420-2015 geregelt. Vorzugsweise hat das sehr feinkörnige Material der Deckschicht 1, 1' einen maximale Korngrösse von 8mm. Vorzugsweise hat das körnige Material der gebundenen Unterschicht 2 eine maximale Korngrösse von 22mm. Vorzugsweise hat das grobkörnige Material der ungebundenen Unterschicht 2 eine maximale Korngrösse Bereich von 16m bis 32mm.

Der Fachmann kann Deckschicht 1, 1' und Unterschicht 2 auf mehrere Arten voneinander unterscheiden. So kann der Fachmann einen Bauplan der Fahrbahn 12 konsultieren. Oft gibt der Bauplan eine Dicke der Deckschicht 1, 1' mit einer Genauigkeit von +/-5mm an. Der Fachmann kann also anhand des Bauplans die Dicke der Deckschicht 1, 1' genau bestimmen. Unabhängig davon kann der Fachmann aber auch eine Kernlochbohrung der Fahrbahn 12 vornehmen, denn das sehr feinkörnige Material der Deckschicht 1, 1' weist einen anderen Äquivalenzdurchmesser als das körnige Material oder das grobkörnige Material der Unterschicht 2 auf. Die Kernlochbohrung liefert einen zylinderförmigen Bohrkern mit einem Dickenprofil der Fahrbahn 12. Das Dickenprofil reicht von der Deckschichtoberfläche 10 der Deckschicht 1, 1' bis weit in die Unterschicht 2. Ein Übergang von der Deckschicht 1, 1' zur Unterschichtoberfläche 20 der Unterschicht 2 lässt sich optisch mit einer Genauigkeit von +/-5mm feststellen. Der Fachmann kann also auch anhand des Bohrkerns die Dicke der Deckschicht 1, 1' genau bestimmen.

Bei hohem Verkehrsaufkommen weist eine Fahrbahn 12 mehrere Unterschichten 2 oberhalb eines Planums auf. So sind beispielsweise mehrere gebundene Unterschichten 2 oberhalb mehrerer ungebundener Unterschichten 2 angeordnet. Dabei nehmen in der Regel eine Korngrösse des in den Unterschichten 2 verwendeten Materials und eine Dicke der Unterschichten 2 von oben nach unten zu. Im Sinne der Erfindung beziehen sich Eigenschaftswörter der Unterschicht 2 wie "oberhalb", "obere", "unterhalb" und "untere" auf die figürliche Darstellung, wo eine oberste Unterschicht 2 durch die Unterschichtoberfläche 20 begrenzt ist. Figürlich ist auch nur eine oberste Unterschicht 2 eingezeichnet. Eine einzelne Unterschicht 2 weist üblicherweise eine Dicke von 80mm (Binderschicht) bis 300mm (Frostschutzschicht) auf. Eine Fahrbahn mit zwei gebundenen Unterschichten 2 und zwei ungebundenen Unterschichten 2 hat dann eine Dicke von bis zu 750mm. Im Unterschied zur Deckschicht 1, 1' wird die Unterschicht 2 nicht in zeitlichen Abständen ersetzt. Die Unterschicht 2 ist für eine Lebensdauer von rund 50 Jahre ausgelegt.

Ein WIM Sensor ist einschlägig bekannt. So offenbaren EP0491655A1 und auch EP0654654A1 einen WIM Sensor in der Ausführungsform eines piezoelektrischen Kraftaufnehmers. Ein solcher WIM Sensor wird auch von der Anmelderin kommerziell vertrieben und ist im Datenblatt 9195G_003-75e-04.16 beschrieben. Der WIM Sensor ist in Längen von 1.5m, 1.75m und 2.0m verfügbar. Der WIM Sensor weist eine Breite von 56mm und eine Höhe von 34mm auf.

Der in den Fig. 1 schematisch dargestellte WIM Sensor 4 weist ein metallisches Hohlprofil mit einem oberen Krafteinleitflansch 41 und einem unteren Kraftverankerungsflansch 42 und einem dazwischen angeordneten Rohrteil 43 auf. Krafteinleitflansch 41, Kraftverankerungsflansch 42 und Rohrteil 43 sind vorzugsweise einstückig gefertigt. Im Sinne der Erfindung beziehen sich Eigenschaftswörter des WIM Sensors 4 wie "obere" und "untere" auf die figürliche Darstellung, wo der Krafteinleitflansch 41 oberhalb des Kraftverankerungsflansches 42 gezeichnet ist. Eine zu erfassende Gewichtskraft greift an einer Oberseite 410 des Krafteinleitflansches 41 an. Der Krafteinleitflansch 41 leitet die Gewichtskraft auf das Rohrteil 43 weiter. Der Kraftverankerungsflansch 42 verankert den WIM Sensor 4 mit Ausgussmasse 5.

Im Rohrteil 43 sind mehrere scheibenförmige piezoelektrische Aufnehmerelemente 44 angeordnet. Die piezoelektrischen Aufnehmerelemente 44 sind scheibenförmig und bestehen aus piezoelektrischem Kristallmaterial wie Quarz (SiO₂ Einkristall), Calcium-Gallo-Germanat (Ca₃Ga₂Ge₄O₁₄ oder CGG), Langasit (La₃Ga₅SiO₁₄ oder LGS), Turmalin, Galliumorthophosphat, Piezokeramik, usw. Die piezoelektrischen Aufnehmerelemente 44 sind kristallographisch so orientiert geschnitten, dass sie eine hohe Empfindlichkeit für die zu erfassende Gewichtskraft haben. Vorzugsweise sind die piezoelektrischen Aufnehmerelemente 44 so orientiert, dass auf den gleichen Oberflächen auf denen die Gewichtskraft entgegen der Vertikalrichtung einwirkt, auch negative und positive elektrischer Polarisationsladungen erzeugt werden. Für eine erfasste Gewichtskraft geben die piezoelektrischen Aufnahmeelemente 44 ein der Grösse der erfassten Gewichtskraft proportionales elektrisches Signal ab, welches an eine ausserhalb des Rohrteils 43 angeordnete Auswerteeinheit weitergeleitet und dort ausgewertet wird. WIM Sensor 4 und Auswerteeinheit bilden ein System zum automatisierten Erfassen von Verkehrsinformationen. Die Auswerteeinheit ist figürlich nicht dargestellt. Das Rohrteil 43 ist wasserdicht und gasdicht verschlossen, so dass die piezoelektrischen Aufnehmerelemente 44 vor schädlichen Umwelteinflüssen geschützt sind.

Links und rechts vom Hohlprofil ist je ein Trennelement 45, 45' angeordnet. Die beiden Trennelemente 45, 45' sind an Aussenseiten des Hohlprofils angebracht. Im Sinne der Erfindung beziehen sich Eigenschaftswörter des WIM Sensors 4 wie "links" und "rechts" auf die figürliche Darstellung, wo die beiden Trennelemente 45, 45' links und rechts des Hohlprofils gezeichnet sind. Obere Enden der Trennelemente 45, 45' reichen bis zu einer linken Seite 411 und bis zu einer rechten Seite 411' des Krafteinleitflansches 41. Die beiden Trennelemente 45, 45' bestehen aus Material mit geringem Kompressionsmodul und niedrigem Elastizitätsmodul wie Silikonschaum, Kautschuk, Expandiertes Polypropylen (EPP), Ethylen-Propylen-Dien-Kautschuk (EPDM), usw. Die beiden Trennelemente 45, 45' verhindern ein Einleiten von Rollkräften in das Hohlprofil. Denn die Gewichtskraft eines Fahrzeuges erzeugt eine Durchbiegung der Fahrbahn 12, was auch Deflektion genannt wird. Bei auf der Fahrbahn 12 fahrenden Fahrzeugen äussert sich die Deflektion in Form von Rollkräften, welche Rollkräfte den fahrenden Fahrzeugen in Fahrtrichtung vorauseilen und nacheilen. Die Rollkräfte werden von Deckschicht 1,1' und Unterschicht 2 sowie der Ausgussmasse 5 zum WIM Sensor 4 geleitet und verfälschen, wenn sie bis zu den piezoelektrischen Aufnehmerelementen 44 gelangen, das Erfassen der Gewichtskraft. Für ein genaues Erfassen der Gewichtskraft ist es daher notwendig, ein einleiten der Rollkräfte in das Hohlprofil wirksam zu verhindern.

Im Unterschied zum WIM Sensor gemäss Datenblatt 9195G_003-75e-04.16 weist der erfinderische WIM Sensor 4 keine Abdeckung auf. Die Oberseite 410 des erfinderischen WIM Sensors 4 ist abdeckungsfrei. Der WIM Sensor gemäss Datenblatt 9195G_003-75e-04.16 wird mit Abdeckung ausgeliefert und mit der Abdeckung bündig in die Deckschichtoberfläche 10 eingebaut. Die Abdeckung ist oberhalb des Krafteinleitflansches angeordnet. Die Abdeckung besteht aus ausgehärteter Ausgussdeckmasse, einem Verbundwerkstoff, usw. Die Abdeckung ist 10mm dick, so dass die gesamte Dicke des WIM Sensors gemäss Datenblatt 9195G_003-75e-04.16 44mm beträgt. Der erfinderische WIM Sensor 4 benötigt keine Abdeckung, denn er wird unterhalb der Deckschicht 1, 1' eingebaut. Der erfinderische WIM Sensor 4 ist somit günstiger in der Herstellung, denn der Herstellschritt des Aufbringens der Abdeckung fällt weg. Der erfinderische WIM Sensor 4 ist auch günstiger in der Anlieferung zum Einbauort, denn vom Gewicht her ist er wesentlich leichter als der WIM Sensor mit Abdeckung. Schliesslich ist der Einbau des erfinderischen WIM Sensors 4 in die Fahrbahn 12 einfacher, denn er ist vom Gewicht her wesentlich leichter, was ein Anheben und Positionieren des erfinderischen WIM Sensors 4 vereinfacht.

Der WIM Sensor 4 wird vorzugsweise schräg oder senkrecht zur Fahrtrichtung der auf der Fahrbahn 12 fahrenden Fahrzeuge in die Fahrbahn 12 eingebaut. Dazu wird in der Fahrbahn 12 eine Nut 3 angelegt und der WIM Sensor 4 wird in die Nut 3 eingebracht und die Nut 3 wird mit Ausgussmasse 5 vergossen.

Die Fig. 2 bis 7 zeigen eine erste Ausführungsform des erfindungsgemässen Verfahrens zum Einbau eines WIM Sensors 4 in die Fahrbahn 12 mit einer Deckschicht 1. In dieser Ausführungsform ist die Fahrbahn 12 fertig erstellt, der WIM Sensor 4 wird in eine fertig erstellte Fahrbahn 12 eingebaut.

Fig. 2 zeigt die Fahrbahn 12 mit Deckschicht 1 und Unterschicht 2. Beispielsweise weist die Deckschicht 1 eine Dicke von 40mm auf. Die Dicke der Deckschicht 1 reicht von der Deckschichtoberfläche 10 zur Unterschichtoberfläche 20.

Nach Fig. 3 wird eine Nut 3 in der Fahrbahn 12 angelegt. Die Nut 3 wird mit einem geeigneten Werkzeug wie eine Fräse, usw. angelegt. Die Nut erstreckt sich schräg oder senkrecht zur Fahrtrichtung der auf der Fahrbahn 12 fahrenden Fahrzeuge. Die Nut 3 hat eine Länge, welche Länge grösser dimensioniert als die Länge des WIM Sensors 4 ist. Beispielsweise ist die Nut 2.2m lang für einen WIM Sensor mit einer Länge von 2.0m. Die Nut 3 hat eine Breite, welche Breite grösser dimensioniert als die Breite des WIM Sensors 4 ist. Beispielsweise ist die Nut 75mm breit für einen WIM Sensor 4 mit einer Breite von 56mm. Die Nut 3 reicht bis zur Unterschicht 2. Die Nut 3 hat eine Tiefe, welche Tiefe grösser dimensioniert als die Tiefe des WIM Sensors 4 ist. Beispielsweise ist die Nut 80mm tief für einen WIM Sensor 4 mit einer Tiefe von 34mm.

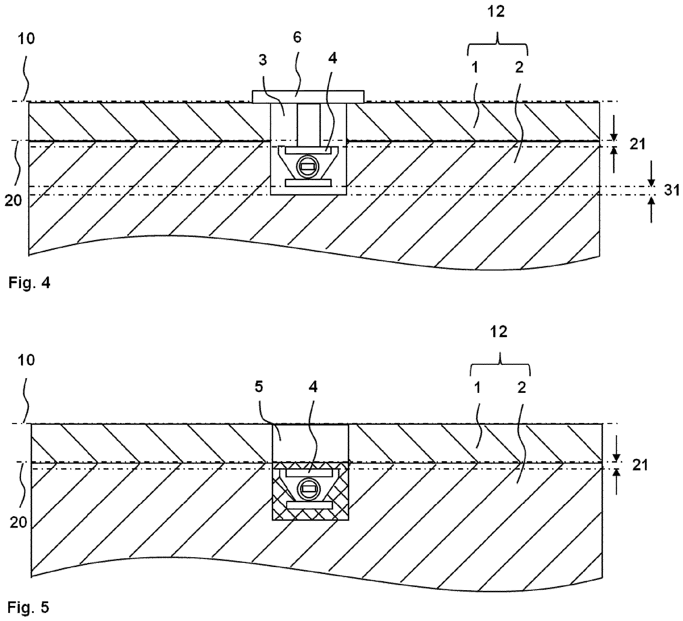

Nach Fig. 4 wird der WIM Sensor 4 in die Nut 3 eingebracht. Vorzugsweise wird der WIM Sensor 4 mit einer Einbringvorrichtung 6 mittig in die Nut 3 eingebracht. Vorzugsweise wird der WIM Sensor 4 mit der Einbringvorrichtung 6 durch Einhängen gezielt in die Nut 3 eingebracht, derart dass der Kraftverankerungsflansch des WIM Sensors 4 in einem Verankerungsabstand 31 von einigen Millimeter oberhalb des Bodens der Nut 3 hängt. Beispielsweise beträgt der Verankerungsabstand 31 zwischen einer Unterseite des Kraftverankerungsflansches und einer Oberseite des Bodens der Nut 3 genau 10mm, mit einer Ungenauigkeit beim Einhängen des WIM Sensors 4 von weniger als 1mm.

Die Nut 3 ist so tief in der Unterschicht 2 angelegt, der in Nut 3 gehängte WIM Sensor 4 nicht über die Unterschichtoberfläche 20 vorsteht. Vorzugsweise wird der WIM Sensor 4 mit der Einbringvorrichtung 6 durch Einhängen gezielt in die Nut 3 eingebracht, derart der WIM Sensor 4 in einem Sicherheitsabstand 21 unterhalb der Unterschichtoberfläche 20 hängt. Für eine Unterschichtoberfläche 20, welche sich 40mm unterhalb der Deckschichtoberfläche 10 erstreckt, und für eine 80mm tiefe Nut 3 sowie für einen 34m tiefen WIM Sensor 4 beträgt der Sicherheitsabstand 21 zwischen der Oberseite des Krafteinleitflansches und der Unterschichtoberfläche 20 genau 6mm, mit einer Ungenauigkeit beim Einhängen des WIM Sensors 4 von weniger als 1mm.

Die Einbringvorrichtung 6 ist einstückig oder mehrstückig. Vorzugsweise ist die Einbringvorrichtung 6 ein Balken aus Metall, Holz, usw. mit einer Breite, welche Breite grösser als diejenige der Nut 3 ist. Beispielsweise ist die Einbringvorrichtung 6 100mm breit für eine 75mm breite Nut 3. Mit geeigneten Mitteln wird der WIM Sensor 4 an einer Unterseite der Einbringvorrichtung 6 reversibel befestigt, derart, dass wenn die Einbringvorrichtung 6 mit dem an der Einbringvorrichtung 6 befestigten WIM Sensor 4 im Bereich der Nut 3 auf die Deckschicht 1 gelegt wird, der an der Einbringvorrichtung 6 befestigte WIM Sensor 4 in die Nut 3 hängt. Beispielsweise wird der WIM Sensor 4 kraftschlüssig und/oder formschlüssig an der Unterseite der Einbringvorrichtung 6 befestigt. Eine kraftschlüssige Befestigung vom WIM Sensor 4 an der Einhangvorrichtung 6 kann durch Vakuum, usw. erfolgen. Eine kraft- und formschlüssige Befestigung vom WIM Sensor 4 an der Einhangvorrichtung 6 kann durch eine Schraubverbindung, usw. erfolgen. Eine formschlüssige Befestigung vom WIM Sensor 4 an der Einhangvorrichtung 6 kann durch Kabelbinder, Seile, usw. erfolgen.

Nach Fig. 5 wird die Nut 3 mit dem eingehängten WIM Sensor 4 mit Ausgussmasse 5 vergossen. Die Ausgussmasse 5 ist ein in Umgebungsluft rasch aushärtender flüssiger Kunststoff wie ein Epoxidharz, usw. Je nach Höhe einer Umgebungstemperatur härtet die Ausgussmasse 5 in Umgebungsluft innerhalb weniger Stunden aus. Die Ausgussmasse 5 wird von der Anmelderin kommerziell vertrieben und ist im Datenblatt 1000A1_003-156e-01.18 beschrieben. Die Nut 3 wird so viel mit Ausgussmasse 5 vergossen, dass die Ausgussmasse 5 bündig mit der Deckschichtoberfläche 10 ist. Vorzugsweise weist die Einbringvorrichtung 6 Öffnungen zum Eingiessen der Ausgussmasse 5 in die Nut 3 auf. Die Öffnungen sind figürlich nicht dargestellt. Die Nut 3 wird so viel mit Ausgussmasse 5 vergossen, bis dass die eingegossene Ausgussmasse 5 an der Einbringvorrichtung 6 ansteht. Beim Vergiessen der Nut 3 mit Ausgussmasse 5 ist die Unterseite der Einbringvorrichtung 6 eine Messlehre, denn sobald die Nut 3 vollständig mit Ausgussmasse 5 gefüllt ist, steht die Ausgussmasse 5 an der Unterseite der Einbringvorrichtung 6 bündig mit der Deckschichtoberfläche 10 an. Im Sinne der Erfindung heisst "bündig", dass eine Oberfläche der in die Nut 3 gegossenen Ausgussmasse 5 im Rahmen der Bearbeitungstoleranz weniger als 1mm von der Deckschichtoberfläche 10 abweicht. Fig. 5 zeigt den vollständig mit Ausgussmasse 5 vergossenen WIM Sensor 4 nach dem Entfernen der Einhängvorichtung 6.

Bei Kenntnis der vorliegenden Erfindung kann der WIM Sensor 4 auch in eine bereits teilweise mit Ausgussmasse 5 gefüllte Nut 3 gehängt werden. Beispielsweise wird die Nut 3 bis zu einer Höhe von 25mm unterhalb der Einbringoberfläche 10 mit Ausgussmasse 5 gefüllt, bevor der WIM Sensor 4 in die Nut 3 gehängt wird. Dies hat den Vorteil, dass die Ausgussmasse 5 nicht durch Öffnungen der Einbringvorrichtung 6 hindurch in die Nut 3 eingegossen werden muss, sondern dass die Ausgussmasse 5 vor dem Auflegen der Einbringvorrichtung 6 auf die Deckschicht 1 im Bereich der Nut 3 in die Nut 3 gegossen werden kann, was rascher und einfacher ist. Wenn dann der an der Einbringvorrichtung 6 befestigte WIM Sensor 4 in die Nut 3 gehängt wird, taucht der WIM Sensor 4 in die Ausgussmasse 5 und die Nut 3 ist dann bereits weitgehend vollständig mit Ausgussmasse 5 gefüllt. Im Sinne der Erfindung bezeichnet das Adjektiv "weitgehend" eine Schwankung von +/-10%.

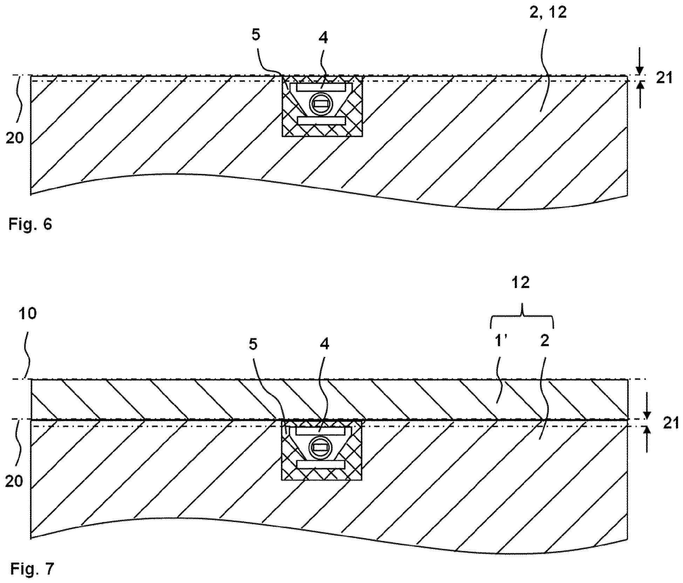

Wenn eine Deckschicht 1 verschlissen ist, wird die verschlissene Deckschicht 1 im Rahmen eines Deckenbauprogramms ersetzt. Dazu wird die verschlissene Deckschicht 1 abgetragen und durch eine neue Deckschicht 1' ersetzt. Fig. 6 zeigt die Fahrbahn 12 nach Fig. 5 mit abgetragener Deckschicht 1. Die Deckschicht 1 wird mit einem geeigneten Werkzeug wie eine Fräse, usw. abgetragen. Beispielsweise wird die 40mm dicke verschlissene Deckschicht 1 vollständig bis auf die Unterschichtoberfläche 20 abgetragen. Da der WIM Sensor 4 nicht über die Unterschichtoberfläche 20 vorsteht, wird der WIM Sensor 4 beim Abtragen der verschlissenen Deckschicht 1 nicht beschädigt. Beispielsweise ist der WIM Sensor 4 im Sicherheitsabstand 21 von genau 6mm unterhalb der Unterschichtoberfläche 20 eingebracht, so dass auch bei einer Abtragtoleranz von 5mm beim Abtragen der verschlissenen Deckschicht 1, der WIM Sensor 4 beim Abtragen der verschlissenen Deckschicht 1 nicht beschädigt werden kann.

Fig. 7 zeigt die Fahrbahn 12 nach Fig. 6 mit neu aufgetragener Deckschicht 1'. Beispielsweise hat die neu aufgetragene Deckschicht 1' wieder eine Dicke von 40mm.

Die Fig. 8 bis 14 zeigen eine zweite Ausführungsform des erfindungsgemässen Verfahrens zum Einbau eines WIM Sensors 4 in eine Fahrbahn 12 ohne eine Deckschicht 1. In dieser Ausführungsform ist die Fahrbahn 12 noch nicht fertig erstellt, der WIM Sensor 4 wird in eine noch nicht fertig erstellte Fahrbahn 12 eingebaut.

Fig. 8 zeigt die Fahrbahn 12 nur mit einer Unterschicht 2 und ohne Deckschicht 1.

Nach Fig. 9 wird eine Nut 3 in der Fahrbahn 12 angelegt. Die Nut 3 wird mit einem geeigneten Werkzeug wie eine Fräse, usw. angelegt. Die Nut erstreckt sich vorzugsweise schräg oder senkrecht zur Fahrtrichtung der auf der Fahrbahn 12 fahrenden Fahrzeuge. Die Nut 3 hat eine Länge, welche Länge grösser dimensioniert als die Länge des WIM Sensors 4 ist. Beispielsweise ist die Nut 2.2m lang für einen WIM Sensor mit einer Länge von 2.0m. Die Nut 3 hat eine Breite, welche Breite grösser dimensioniert als die Breite des Wim Sensors 4 ist. Beispielsweise ist die Nut 75mm breit für einen WIM Sensor 4 mit einer Breite von 56mm. Die Nut 3 reicht in die Unterschicht 2. Die Nut 3 hat eine Tiefe, welche Tiefe grösser dimensioniert als die Tiefe des WIM Sensors 4 ist. Beispielsweise ist die Nut 40mm tief für einen WIM Sensor 4 mit einer Tiefe von 34mm.

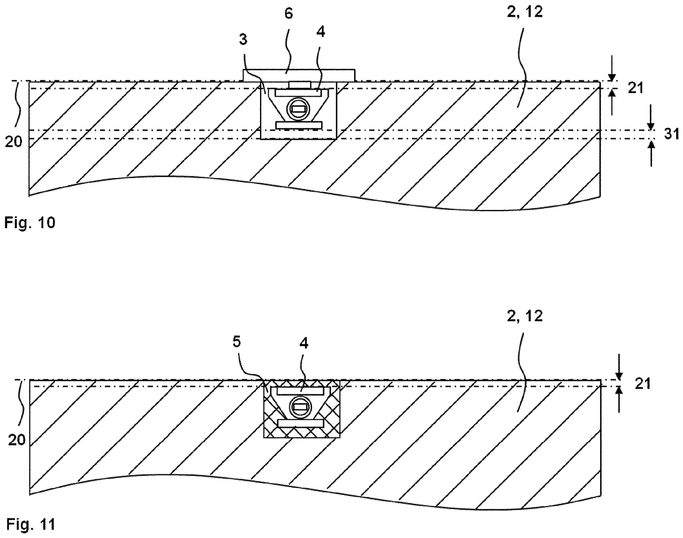

Nach Fig. 10 wird der WIM Sensor 4 in die Nut 3 eingebracht. Vorzugsweise wird der WIM Sensor 4 mit der Einbringvorrichtung 6 mittig in die Nut 3 eingebracht. Vorzugsweise wird der WIM Sensor 4 mit der Einbringvorrichtung 6 durch Einhängen gezielt in die Nut 3 eingebracht, derart dass der Kraftverankerungsflansch des WIM Sensors 4 im Verankerungsabstand 31 von einigen Millimeter oberhalb des Bodens der Nut 3 hängt. Beispielsweise beträgt der Verankerungsabstand 31 zwischen einer Unterseite des Kraftverankerungsflansches und einer Oberseite des Bodens der Nut 3 genau 10mm, mit einer Ungenauigkeit beim Einhängen des WIM Sensors 4 von weniger als 1mm.

Die Nut 3 ist so tief in der Unterschicht 2 angelegt, der in Nut 3 gehängte WIM Sensor 4 nicht über die Unterschichtoberfläche 20 vorsteht. Vorzugsweise wird der WIM Sensor 4 mit der Einbringvorrichtung 6 durch Einhängen gezielt in die Nut 3 eingebracht, derart der WIM Sensor 4 in einem Sicherheitsabstand 21 unterhalb der Unterschichtoberfläche 20 hängt. Für eine 40mm tiefe Nut 3 sowie für einen 34m tiefen WIM Sensor 4 beträgt der Sicherheitsabstand 21 zwischen der Oberseite des Krafteinleitflansches und der Unterschichtoberfläche 20 genau 6mm, mit einer Ungenauigkeit beim Einhängen des WIM Sensors 4 von weniger als 1mm.

Die Einbringvorrichtung 6 ist einstückig oder mehrstückig. Vorzugsweise ist die Einbringvorrichtung 6 ein Balken aus Metall, Holz, usw. mit einer Breite, welche Breite grösser als diejenige der Nut 3 ist. Beispielsweise ist die Einbringvorrichtung 6 100mm breit für eine 75mm breite Nut 3. Mit geeigneten Mitteln wird der WIM Sensor 4 an einer Unterseite der Einbringvorrichtung 6 reversibel befestigt, derart, dass wenn die Einbringvorrichtung 6 mit dem an der Einbringvorrichtung 6 befestigten WIM Sensor im Bereich der Nut 3 auf die Unterschicht 2 gelegt wird, der an der Einbringvorrichtung 6 befestigte WIM Sensor 4 in die Nut 3 hängt. Beispielsweise wird der WIM Sensor 4 kraftschlüssig und/oder formschlüssig an der Unterseite der Einbringvorrichtung 6 befestigt. Eine kraftschlüssige Befestigung vom WIM Sensor 4 an der Einhangvorrichtung 6 kann durch Vakuum, usw. erfolgen. Eine kraft- und formschlüssige Befestigung vom WIM Sensor 4 an der Einhangvorrichtung 6 kann durch eine Schraubverbindung, usw. erfolgen. Eine formschlüssige Befestigung vom WIM Sensor 4 an der Einhangvorrichtung 6 kann durch Kabelbinder, Seile, usw. erfolgen.

Nach Fig. 11 wird die Nut 3 mit dem eingehängten WIM Sensor 4 mit Ausgussmasse 5 vergossen. Die Ausgussmasse 5 ist ein in Umgebungsluft rasch aushärtender flüssiger Kunststoff wie ein Epoxidharz, usw. Je nach Höhe einer Umgebungstemperatur härtet die Ausgussmasse 5 in Umgebungsluft innerhalb weniger Stunden aus. Die Ausgussmasse 5 wird von der Anmelderin kommerziell vertrieben und ist im Datenblatt 1000A1_003-156e-01.18 beschrieben. Die Nut 3 wird so viel mit Ausgussmasse 5 vergossen, dass die Ausgussmasse 5 bündig mit der Unterschichtoberfläche 20 ist. Vorzugsweise weist die Einbringvorrichtung 6 Öffnungen zum Eingiessen der Ausgussmasse 5 in die Nut 3 auf. Die Öffnungen sind figürlich nicht dargestellt. Die Nut 3 wird so viel mit Ausgussmasse 5 vergossen, bis dass die eingegossene Aussgussmasse 5 an der Einbringvorrichtung 6 ansteht. Beim Vergiessen der Nut 3 mit Ausgussmasse 5 ist die Unterseite der Einbringvorrichtung 6 eine Messlehre, denn sobald die Nut 3 vollständig mit Ausgussmasse 5 gefüllt ist, steht die Ausgussmasse 5 an der Unterseite der Einbringvorrichtung 6 bündig mit der Unterschichtoberfläche 20 an. Im Sinne der Erfindung heisst "bündig", dass eine Oberfläche der in die Nut 3 gegossenen Ausgussmasse 5 im Rahmen der Bearbeitungstoleranz weniger als 1mm von der Unterschichtoberfläche 20 abweicht. Fig. 11 zeigt den vollständig mit Ausgussmasse 5 vergossenen WIM Sensor 4 nach dem Entfernen der Einhängvorichtung 6.

Bei Kenntnis der vorliegenden Erfindung kann der WIM Sensor 4 auch in eine bereits teilweise mit Ausgussmasse 5 gefüllte Nut 3 gehängt werden. Beispielsweise wird die Nut 3 bis zu einer Höhe von 25mm unterhalb der Unterschichtoberfläche 20 mit Ausgussmasse 5 gefüllt, bevor der WIM Sensor 4 in die Nut 3 gehängt wird. Dies hat den Vorteil, dass die Ausgussmasse 5 nicht durch Öffnungen der Einbringvorrichtung 6 hindurch in die Nut 3 eingegossen werden muss, sondern dass die Ausgussmasse 5 vor dem Auflegen der Einbringvorrichtung 6 auf die Unterschicht 2 im Bereich der Nut 3 in die Nut 3 gegossen werden kann, was rascher und einfacher ist. Wenn dann der an der Einbringvorrichtung 6 befestigte WIM Sensor 4 in die Nut 3 gehängt wird, taucht der WIM Sensor 4 in die Ausgussmasse 5 und die Nut 3 ist dann bereits weitgehend vollständig mit Ausgussmasse 5 gefüllt. Im Sinne der Erfindung bezeichnet das Adjektiv "weitgehend" eine Schwankung von +/-10%.

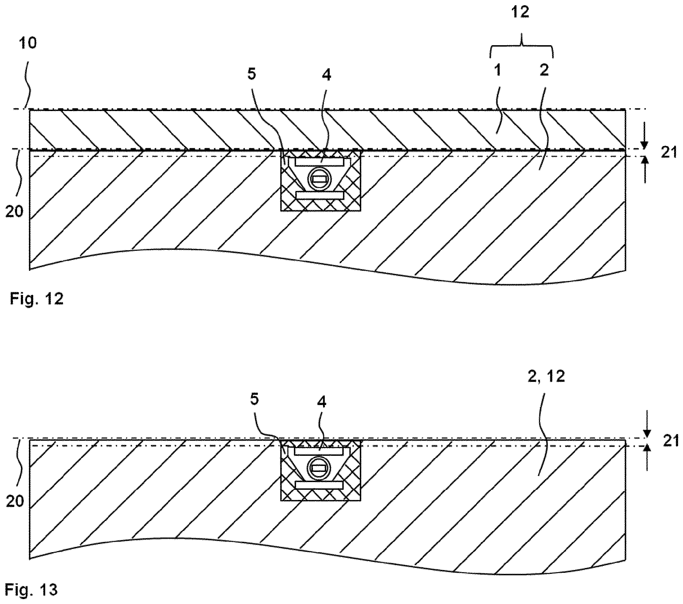

Fig. 12 zeigt die Fahrbahn 12 nach Fig. 11 mit aufgetragener Deckschicht 1. Die Fahrbahn 12 ist nun fertig erstellt. Beispielsweise hat die aufgetragene Deckschicht 1 eine Dicke von 40mm.

Wenn eine Deckschicht 1 verschlissen ist, wird die verschlissene Deckschicht 1 im Rahmen eines Deckenbauprogramms ersetzt. Dazu wird die verschlissene Deckschicht 1 abgetragen und durch eine neue Deckschicht 1' ersetzt. Fig. 13 zeigt die Fahrbahn 12 nach Fig. 12 mit abgetragener Deckschicht 1. Die Deckschicht 1 wird mit einem geeigneten Werkzeug wie eine Fräse, usw. abgetragen. Beispielsweise wird die 40mm dicke verschlissene Deckschicht 1 vollständig bis auf die Unterschichtoberfläche 20 abgetragen. Da der WIM Sensor 4 nicht über die Unterschichtoberfläche 20 vorsteht, wird der WIM Sensor 4 beim Abtragen der verschlissenen Deckschicht 1 nicht beschädigt. Beispielsweise ist der WIM Sensor 4 in einem Sicherheitsabstand 21 von genau 6mm unterhalb der Unterschichtoberfläche 20 eingebracht, so dass auch bei einer Abtragtoleranz von 5mm beim Abtragen der verschlissenen Deckschicht 1, der WIM Sensor 4 beim Abtragen der verschlissenen Deckschicht 1 nicht beschädigt werden kann.

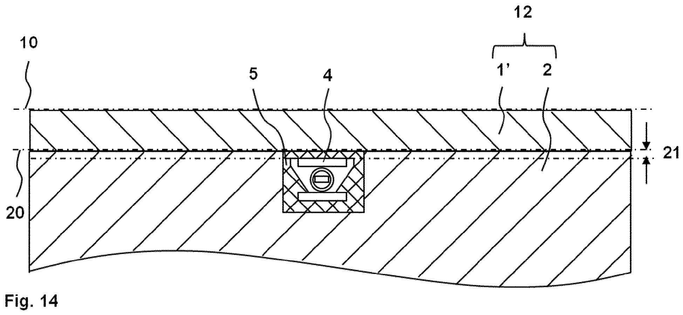

Fig. 14 zeigt die Fahrbahn 12 nach Fig. 13 mit neu aufgetragener Deckschicht 1'. Beispielsweise hat die neu aufgetragene Deckschicht 1' wieder eine Dicke von 40mm.

### Bezugszeichenliste

- 1, 1': Deckschicht
- 2: Unterschicht
- 3: Nut
- 4: WIM-Sensor
- 5: Ausgussmasse
- 6: Einbringvorrichtung
- 10: Deckschichtoberfläche
- 12: Fahrbahn
- 20: Unterschichtoberfläche
- 21: Sicherheitsabstand
- 31: Verankerungsabstand
- 41: Krafteinleitflansch
- 42: Kraftverankerungsflansch
- 43: Rohrteil
- 44: piezoelektrische Aufnehmerelemente
- 45, 45': Trennelemente
- 410: Oberseite
- 411, 411': Seiten

## Patentansprüche

1. Verfahren zum Einbau eines Weigh-In-Motion (WIM) Sensors (4) in eine Fahrbahn (12); welcher eingebaute WIM Sensor (4) eine Gewichtskraft eines auf der Fahrbahn (12) fahrenden Fahrzeuges erfasst; und welche Fahrbahn (12) eine Deckschicht (1) und eine direkt an die Deckschicht (1, 1') angrenzende Unterschicht (2) aufweist, welche Deckschicht (1, 1') aus sehr feinkörnigem Material besteht, welches einen anderen Äquivalenzdurchmesser als das körnige Material oder das grobkörnige Material der Unterschicht (2) aufweist; und wobei in der Fahrbahn (12) eine Nut (3) angelegt wird, welche Nut (3) in einer Fahrbahn (12) mit Deckschicht (1) angelegt wird; **gekennzeichnet dadurch, dass** die Nut (3) bis zur Unterschicht (2) reicht; dass der WIM Sensor (4) in die Nut (3) eingebracht wird; dass die Nut (3) so viel mit Ausgussmasse (5) vergossen wird, dass die Ausgussmasse (5) bündig mit einer Deckschichtoberfläche (10) der Deckschicht (1) ist; und dass die Nut (3) so tief in der Unterschicht (2) angelegt wird, dass der in die Nut (3) eingebrachte WIM Sensor (4) nicht über eine Unterschichtoberfläche (20) der Unterschicht (2) vorsteht.

2. Verfahren zum Einbau eines Weigh-In-Motion (WIM) Sensors (4) in eine Fahrbahn (12); welcher eingebaute WIM Sensor (4) eine Gewichtskraft eines auf der Fahrbahn (12) fahrenden Fahrzeuges erfasst; und welche Fahrbahn (12) eine Deckschicht (1) und eine direkt an die Deckschicht (1, 1') angrenzende Unterschicht (2) aufweist, welche Deckschicht (1, 1') aus sehr feinkörnigem Material besteht,
welches einen anderen Äquivalenzdurchmesser als das körnige Material oder das grobkörnige Material der Unterschicht (2) aufweist; **gekennzeichnet dadurch, dass** in der Fahrbahn (12) eine Nut (3) angelegt wird, welche Nut (3) in einer Fahrbahn (12) ohne Deckschicht (1) angelegt wird; welche Nut (3) bis zur Unterschicht (2) reicht; dass der WIM Sensor (4) in die Nut (3) eingebracht wird; dass die Nut (3) so viel mit Ausgussmasse (5) vergossen wird, dass die Ausgussmasse (5) bündig mit einer Unterschichtoberfläche (20) der Unterschicht (2) ist; und dass die Nut (3) so tief in der Unterschicht (2) angelegt wird, dass der in die Nut (3) eingebrachte WIM Sensor (4) nicht über die Unterschichtoberfläche (20) der Unterschicht (2) vorsteht.

3. Verfahren nach einem der Ansprüche 1 oder 2, **dadurch gekennzeichnet, dass** der WIM Sensor (4) mit einer Einbringvorrichtung (6) mittig in die Nut (3) eingebracht wird.

4. Verfahren nach Anspruch 3, **dadurch gekennzeichnet, dass** der WIM Sensor (4) mit der Einbringvorrichtung (6) in einem Sicherheitsabstand (21) unterhalb der Unterschichtoberfläche (20) der Unterschicht (2) gehängt wird, welcher Sicherheitsabstand (21) grösser als eine Abtragtoleranz beim Abtragen der verschlissenen Deckschicht (1) ist, so dass der WIM Sensor (4) beim Abtragen der verschlissenen Deckschicht (1) nicht beschädigt werden kann.

5. Verfahren nach Anspruch 4, **dadurch gekennzeichnet, dass** der WIM Sensor (4) einen Krafteinleitflansch (41) aufweist, welcher Krafteinleitflansch (41) eine Oberseite (410) aufweist; und dass der Sicherheitsabstand (21) zwischen der Oberseite (410) des Krafteinleitflansches (41) und der Unterschichtoberfläche (20) gemessen wird.

6. Verfahren nach einem der Ansprüche 3 oder 4, **dadurch gekennzeichnet, dass** der WIM Sensor (4) mit der Einbringvorrichtung (6) in einem Verankerungsabstand (31) oberhalb eines Bodens der Nut (3) gehängt wird.

7. Verfahren nach einem der Ansprüche 1 oder 2, **dadurch gekennzeichnet, dass** der WIM Sensor (4) mit einer Einbringvorrichtung (6) mittig in die Nut (3) eingebracht wird; und dass die Nut (3) so viel mit Ausgussmasse (5) vergossen wird, bis dass die eingegossene Ausgussmasse (5) an der Einbringvorrichtung (6) ansteht.

8. Verfahren nach Anspruch 2, **dadurch gekennzeichnet, dass** nachdem die Nut (3) mit Ausgussmasse (5) vergossen worden ist, eine Deckschicht (1) auf der Unterschicht (2) aufgebracht wird.

9. Verfahren nach einem der Ansprüche 1 oder 8, **dadurch gekennzeichnet, dass** eine verschlissene Deckschicht (1) abgetragen wird; und dass eine neue Deckschicht (1') aufgebracht wird.

10. Verwendung eines Weigh-In-Motion (WIM) Sensor (4) in dem Verfahren nach einem der Ansprüche 1 bis 8, **dadurch gekennzeichnet, dass** der WIM Sensor (4) einen Krafteinleitflansch (41) aufweist, welcher Krafteinleitflansch (41) eine Oberseite (410) aufweist, welche Oberseite (410) keine Abdeckung aus ausgehärteter Ausgussmasse aufweist und dass der WIM Sensor (4) Trennelemente (45, 45') aus Material mit geringem Kompressionsmodul und niedrigem Elastizitätsmodul aufweist, welche Trennelemente (45, 45') bis zu Seiten (411, 411') des Krafteinleitflansches (41) reichen.

## Claims

1. A method of mounting a Weigh-In-Motion (WIM) sensor (4) in a roadway (12); which mounted WIM sensor (4) detects a weight force of a vehicle traveling on the roadway (12); and which roadway (12) has a surface layer (1) and a base layer (2) directly adjacent to the surface layer (1, 1'); which surface layer (1, 1') consists of very finely grained material and has an equivalent diameter that is different from that of the granular material or the coarse-grained material of the base layer (2); and whereby a groove (3) is made in the roadway (12), which groove (3) is made in a roadway (12) with a surface layer (1); **characterized in that** the groove (3) extends to the base layer (2); that the WIM sensor (4) is inserted into the groove (3); that the groove (3) is cast with so much grout (5), that the grout (5) is flush with a surface layer surface (10) of the surface layer (1); and that the groove (3) is made to such a depth in the base layer (2), that the WIM sensor (4) introduced into the groove (3) does not protrude beyond a base layer surface (20) of the base layer (2).

2. A method of mounting a Weigh-In-Motion (WIM) sensor (4) in a roadway (12); which mounted WIM sensor (4) detects a weight force of a vehicle traveling on the roadway (12); and which roadway (12) has a surface layer (1) and a base layer (2) directly adjacent to the surface layer (1, 1'); which surface layer (1, 1') consists of very finely grained material and has an equivalent diameter that is different from that of the granular material or the coarse-grained material of the base layer (2); **characterized in that** a groove (3) is made in the roadway (12), which groove (3) is made in a roadway (12) without a surface layer (1); which groove (3) extends to the base layer (2); that the WIM sensor (4) is inserted into the groove (3); that the groove (3) is cast with so much grout (5), that the grout (5) is flush with a base layer surface (20) of the base layer (2); and that the groove (3) is made to such a depth in the base layer (2), that the WIM sensor (4) introduced into the groove (3) does not protrude beyond the base layer surface (20) of the base layer (2).

3. The method according to any of claims 1 or 2, **characterized in that** the WIM sensor (4) is introduced in the groove (3) centrally by means of an introduction device (6).

4. The method according to claim 3, **characterized in that** the WIM sensor (4) is suspended by means of the introduction device (6) at a safety distance (21) below the base layer surface (20) of the base layer (2), which safety distance (21) is greater than a removal tolerance during removal of a worn surface layer (1), such that the WIM sensor (4) cannot be damaged during removal of the worn surface layer (1) .

5. The method according to claim 4, **characterized in that** the WIM sensor (4) comprises a force introduction flange (41), said force introduction flange (41) having an upper surface (410), and that the safety distance (21) is measured between the upper surface (410) of the force introducing flange (41) and base layer surface (20).

6. The method according to any of claims 3 or 4, **characterized in that** the WIM sensor (4) is suspended by means of an introduction device (6) at an anchoring distance (31) above a bottom of the groove (3).

7. The method according to any of claims 1 or 2, **characterized in that** the WIM sensor (4) is introduced centrally into the groove (3) by means of an introduction device (6); and that the groove (3) is cast with so much grout (5) that the cast grout (5) abuts at the introduction device (6).

8. The method according to claim 2, **characterized in that** after casting the groove (3) with grout (5), a surface layer (1) is applied above the base layer (2).

9. The method according to any of claims 1 or 8, **characterized in that** a worn surface layer (1) is removed; and a new surface layer (1') is applied.

10. A Weigh-In-Motion (WIM) sensor (4) for use in the method according to any of claims 1 to 8, **characterized in that** the WIM sensor (4) comprises a force introduction flange (41), said force introduction flange (41) having an upper surface (410), which upper surface (410) is free of a cover und that the WIM sensor (4) comprises separating members (45, 45') made from material with low compression modulus and low elastic modulus, which separating members (45, 45') extend to lateral surfaces (411, 411') of the force introduction flange (41).

## Revendications

1. Procédé pour l'insertion d'un capteur de pesage dynamique (WIM) (4) dans une chaussée (12); où ledit capteur WIM (4), dans l'état inséré, détecte un poids d'un véhicule se déplaçant sur ladite chaussée (12) et où ladite chaussée (12) comprend une couche supérieure (1) et une couche de base (2) se situant directement adjacente à ladite couche supérieure (1, 1'); ladite couche supérieure (1, 1') étant constitué d'un matériau à grains très fins ayant un diamètre équivalent différent de celui du matériau granulaire ou du matériau à grains grossiers de la couche de base (2); et où une rainure (3) est fabriquée dans ladite chaussée (12), ladite rainure (3) étant fabriquée dans une chaussée comprenant une couche supérieure (1); **caractérisé en ce que** ladite rainure (3) s'étend jusqu'à la couche de base (2); **en ce que** le capteur WIM (4) est inséré dans la rainure (3); **en ce que** la rainure (3) est remplie avec une quantité de masse de coulée (5) telle que ladite masse de coulée (5) est en affleurement avec une surface de couche supérieure (10) de la couche supérieure (1) ; et **en ce que** ladite rainure (3) est fabriquée dans la couche de base (2) à une profondeur telle que le capteur WIM (4) inséré dans la rainure (3) ne dépasse pas une surface de couche de base (20) de la couche de base (2).

2. Procédé pour l'insertion d'un capteur de pesage dynamique (WIM) (4) dans une chaussée (12); où ledit capteur WIM (4), dans l'état inséré, détecte un poids d'un véhicule se déplaçant sur ladite chaussée (12) et où ladite chaussée (12) comprend une couche supérieure (1) et une couche de base (2) se situant directement adjacente à ladite couche supérieure (1, 1'); ladite couche supérieure (1, 1') étant constitué d'un matériau à grains très fins ayant un diamètre équivalent différent de celui du matériau granulaire ou du matériau à grains grossiers de la couche de base (2); **caractérisé en ce qu'**une rainure (3) est fabriquée dans ladite chaussée (12), ladite rainure (3) étant fabriquée dans une chaussée dépourvue de couche supérieure (1); où ladite rainure (3) s'étend jusqu'à la couche de base (2); **en ce que** le capteur WIM (4) est inséré dans la rainure (3); **en ce que** la rainure (3) est remplie avec une quantité de masse de coulée (5) telle que ladite masse de coulée (5) est en affleurement avec une surface de couche de base (20) de la couche de base (2); et **en ce que** ladite rainure (3) est fabriquée dans la couche de base (2) à une profondeur telle que le capteur WIM (4) inséré dans la rainure (3) ne dépasse pas la surface de couche de base (20) de la couche de base (2).

3. Procédé selon l'une quelconque des revendications 1 ou 2, **caractérisé en ce que** le capteur WIM (4) est inséré centralement dans la rainure (3) au moyen d'un dispositif d'insertion (6).

4. Procédé selon la revendication 3, **caractérisé en ce qu'**au moyen du dispositif d'insertion (6) ledit capteur WIM (4) est suspendu à une distance de sécurité (21) en dessous de la surface de la couche de base (20) de la couche de base (2), ladite distance de sécurité (21) étant plus grande qu'une tolérance d'enlèvement lors de l'enlèvement de la couche supérieure (1) usée de manière que ledit capteur WIM (4) ne puisse pas être endommagé lors de l'enlèvement de la couche supérieure (1) usée.

5. Procédé selon la revendication 4, **caractérisé en ce que** le capteur WIM (4) comprend une bride d'introduction de force (41), ladite bride d'introduction de force (41) ayant une surface supérieure (410); et **en ce qu'**on mesure ladite distance de sécurité (21) entre la surface supérieure (410) de la bride d'introduction de force (41) et ladite surface de couche de base (20).

6. Procédé selon l'une quelconque des revendications 3 ou 4, **caractérisé en ce qu'au** moyen du dispositif d'insertion (6) le capteur WIM (4) est suspendu à une distance d'ancrage (31) au-dessus d'un fond de la rainure (3).

7. Procédé selon l'une quelconque des revendications 1 ou 2, **caractérisé en ce que** le capteur WIM (4) est inséré centralement dans la rainure (3) au moyen d'un dispositif d'insertion (6); et **en ce que** la rainure (3) est remplie avec une quantité de masse de coulée (5) telle que ladite masse de coulée (5) est introduite jusqu'au niveau du dispositif d'insertion (6).

8. Procédé selon la revendication 2, **caractérisé en ce qu'**après le remplissage de la rainure (3) avec de la masse de coulée (5) une couche supérieure (1) est appliquée sur la couche de base (2).

9. Procédé selon l'une quelconque des revendications 1 ou 8, **caractérisé en ce qu'une** couche supérieure (1) usée est enlevée; et **en ce qu'**une nouvelle couche supérieure (1') est appliquée.

10. Utilisation d'un capteur de pesage dynamique (WIM) (4) dans le procédé selon l'une quelconque des revendications 1 à 8, **caractérisé en ce que** ledit capteur WIM (4) comprend une bride d'introduction de force (41) où ladite bride d'introduction de force (41) comprend une surface supérieure (410), ladite surface supérieure (410) étant dépourvue de couverture de masse de coulée durcie; et **en ce que** le capteur WIM (4) comprend des éléments de séparation (45, 45') fabriqués d'un matériau ayant un module de compression faible et un module d'élasticité faible, dans lequel lesdits éléments de séparation (45, 45') s'étendent jusqu'à des surfaces latérales (411, 411') de la bride d'insertion de force (41).
